# EUROPÄISCHE PATENTSCHRIFT

(11) **EP 1 930 638 B1**
(45) Veröffentlichungstag und Bekanntmachung des Hinweises auf die Patenterteilung: **05.01.2011**
(21) Anmeldenummer: 06025084.2
(22) Anmeldetag: 05.12.2006
(51) Int. Cl.: F16K 31/42, F15B 11/068, F15B 13/043

(54) **Softstart-Ventileinrichtung**
Softstart valve device
Soupape à ouverture douce

(43) Veröffentlichungstag der Anmeldung: 11.06.2008
(73) Patentinhaber: FESTO AG & Co. KG, 73734 Esslingen (DE)
(72) Erfinder: Decker, Andreas, 73730 Esslingen (DE)
(74) Vertreter: Abel, Martin

(56) Entgegenhaltungen:
- DE-U1-202004 015 468
- US-A- 5 337 788
- WERNER DEPPERT, KURT STOLL: "Pneumatische Steuerungen" 1994, VOGL VERLAG , WÜRZBURG, DE , XP002433275 * Seite 160 - Seite 161 *

## Beschreibung

Die Erfindung betrifft eine Softstart-Ventileinrichtung, mit einem zwischen einen ein unter einem Primärdruck stehendes Druckmedium führenden Primärkanal und einen Sekundärkanal eingeschalteten Hauptventilglied, das durch eine Schließkraft in eine die Verbindung zwischen Primärkanal und Sekundärkanal abtrennende Schließstellung vorspannbar oder vorgespannt ist und das durch eine entgegengesetzt wirkende, die Schließkraft überwindende Öffnungskraft in eine die Verbindung zwischen Primärkanal und Sekundärkanal freigebende Offenstellung umschaltbar ist, wobei die Öffnungskraft in einem sekundärdruckgesteuerten Betriebsmodus der Ventileinrichtung von dem sich im Sekundärkanal allmählich aufbauenden Sekundärdruck des Druckmediums abgeleitet wird, das unter Umgehung des Hauptventilglieds über eine Drosseleinrichtung hinweg aus dem Primärkanal in den Sekundärkanal zuströmt.

Eine derartige, für sekundärdruckgesteuerten Betrieb ausgelegte Softstart-Ventileinrichtung geht aus dem Fachbuch "Pneumatische Steuerungen", Werner Deppert, Kurt Stoll, Vogel Verlag, 10. Auflage 1994, Seiten 160 und 161, hervor. Dort ist das Hauptventilglied eines als Zweistellungsventil ausgebildeten Absperrventils in die Verbindung zwischen einem mit einer Druckquelle verbundenen Primärkanal und einem mit den zu versorgenden Verbrauchern verbundenen Sekundärkanal eingeschaltet und kann die Verbindung wahlweise absperren (Schließstellung) oder freigeben (Offenstellung). Normalerweise ist das Hauptventilglied durch eine auf dem Primärdruck basierende Schließkraft in die Schließstellung vorgespannt. Nach dem Einschalten der Ventileinrichtung kann das über den Primärkanal zugeführte Druckmedium das geschlossene Hauptventilglied umgehen, wobei es über eine Drosseleinrichtung hinweg in den Sekundärkanal überströmt. Der im Sekundärkanal herrschende Sekundärdruck ist zur Erzeugung einer der Schließkraft entgegengesetzten Stellkraft auf das Hauptventilglied zurückgeführt und schaltet das Hauptventilglied in die Offenstellung um, wenn der Sekundärdruck und mithin die vorgenannte Stellkraft eine vorbestimmte Öffnungskraft erreicht hat. Somit ist gewährleistet, dass die Softstart-Ventileinrichtung einen ungedrosselten Fluiddurchgang erst dann zulässt, wenn der Sekundärdruck auf ein gewisses Druckniveau angestiegen ist. Damit wird insgesamt ein relativ langsamer Druckaufbau bei den angeschlossenen Verbrauchern erreicht und das Auftreten von Druckstößen vermieden, die zu Beschädigungen oder ungewollt schnellen Bewegungen an den angeschlossenen Verbrauchern führen könnten.

Es existieren allerdings Anwendungen, bei denen mit einem solchen vom Sekundärdruck abhängig gesteuerten Softstart-Ventil eine nur unzureichende Betriebsweise möglich ist. Tritt beispielsweise sekundärseitig ein relativ hoher Fluidverbrauch auf, kann es unter Umständen sehr lange dauern, bis der zur Erzeugung der Öffnungskraft erforderliche Sekundärdruck aufgebaut ist, was die Inbetriebnahmezeiten einer Anlage stark verzögern kann. Unter ungünstigen Bedingungen kann sogar ein Umschalten des Hauptventilgliedes in die Offenstellung überhaupt nicht erfolgen.

Um solchen Unzulänglichkeiten zu begegnen, sind auch schon rein zeitabhängig gesteuerte Softstart-Ventile bekannt, bei denen das Hauptventilglied unabhängig vom tatsächlich herrschenden Sekundärdruck nach einer bestimmten Zeitspanne langsam in die Offenstellung umschaltet. Als Beispiel für ein solches Softstart-Ventil kann das in dem Produktkatalog "Der Pneumatic-Katalog", Ausgabe 1997/1998, FESTO AG & Co., Seite 9.1/42-1 erläuterte sogenannte Druckaufbauventil genannt werden. Da bei einem solchen rein zeitgesteuerten Ventil keine Abfrage des Sekundärdruckes und mithin des bei den angeschlossenen Verbrauchern herrschenden Druckes stattfindet, besteht allerdings das Risiko, dass bei unsachgemäßem Einsatz ein zu frühzeitiges Öffnen des Hauptventilgliedes hervorgerufen wird, mit daraus möglicherweise resultierenden Schäden wegen eines zu starken Druckimpulses.

Vielfach könnte dem jeweiligen Anwendungsfall durch eine spezifische Auswahl der verwendeten Art von Softstart-Ventil Rechnung getragen werden. Bei wechselnden Betriebsbedingungen erweist sich dies jedoch als nicht durchführbar. Es besteht in der Regel keine realistische Möglichkeit, eine Anlage von Anwendungsfall zu Anwendungsfall umzurüsten.

Die vorliegende Erfindung hat sich zur Aufgabe gestellt, Maßnahmen vorzuschlagen, die in den meisten Fällen einen spezifisch auf die Anforderungen abgestellten allmählichen Druckaufbau ermöglichen.

Zur Lösung dieser Aufgabe ist die Softstart-Ventileinrichtung der eingangs genannten Art mit Umschaltmitteln ausgestattet, die ein Umschalten des Betriebsmodus der Ventileinrichtung zwischen dem sekundärdruckgesteuerten Betriebsmodus und einem das Hauptventil unabhängig vom Sekundärdruck rein zeitabhängig in die Offenstellung umschaltenden, zeitgesteuerten Betriebsmodus ermöglichen.

Die Umschaltmittel dieser erfindungsgemäßen Softstart-Ventileinrichtung enthalten vorzugsweise ein zum Wechseln des Betriebsmodus betätigbares Umschaltventil, das schaltstellungsabhängig die für den jeweiligen Betriebsmodus erforderliche interne fluidische Verschaltung der Komponenten der Softstart-Ventileinrichtung hervorruft.

Bei einer solchen Softstart-Ventileinrichtung hat der Anwender die Möglichkeit, den Betriebsmodus in Abhängigkeit vom jeweiligen Anwendungsfall spezifisch auszuwählen, ohne die Softstart-Ventileinrichtung auszutauschen oder umzurüsten. Selbst bei sich häufig ändernden Einsatzbedingungen kann somit einfach und schnell ein Umschalten zwischen dem sekundärdruckgesteuerten Betriebsmodus und dem rein zeitgesteuerten Betriebsmodus vorgenommen werden.

Die Softstart-Ventileinrichtung kann überall dort eingesetzt werden, wo bei der Inbetriebnahme einer Anlage oder Vorrichtung ein langsamer Druckaufbau angestrebt wird. Beispielsweise kann die Softstart-Ventileinrichtung Bestandteil einer mit mehreren Mehrwegeventilen zu einer Baugruppe zusammengefassten Ventilbatterie sein. Eine ebenfalls besonders vorteilhafte Anwendung ist der Einsatz als Komponente einer bevorzugt modular aufgebauten, zur Aufbereitung von Druckluft eingesetzten Druckluft-Wartungsvorrichtung. Dort kann die Softstart-Ventileinrichtung, insbesondere wenn sie als kompakte Ventileinheit ausgeführt ist, die Funktion eines sogenannten Einschaltventils übernehmen.

Vorteilhafte Weiterbildungen der Erfindung gehen aus den Unteransprüchen hervor.

Die Softstart-Ventileinrichtung ist insbesondere so ausgelegt, dass der Sekundärdruck während des zeitgesteuerten Betriebsmodus keine resultierenden Stellkräfte auf das Hauptventilglied ausübt. Zur Erzeugung der erforderlichen Öffnungskraft wird das Hauptventilglied stattdessen in seiner Öffnungsrichtung von einem Druckmedium beaufschlagt, das ohne Verbindung zum Sekundärkanal gedrosselt zuströmt.

Bei einer zweckmäßigen Weiterbildung ist die Softstart-Ventileinrichtung so ausgelegt, dass während des zeitgesteuerten Betriebsmodus die für die Erzeugung der Öffnungskraft verantwortliche gedrosselte Zuströmung des Druckmediums über diejenige Drosseleinrichtung hinweg stattfindet, die während des sekundärdruckabhängigen Betriebsmodus für den Druckaufbau im Sekundärkanal verantwortlich ist. Während des zeitgesteuerten Betriebsmodus ist die Verbindung zwischen dieser Drosseleinrichtung und dem Sekundärkanal jedoch abgetrennt, sodass ein vom Sekundärdruck unabhängiger Druckaufbau für die erzeugung der Öffnungskraft erfolgen kann.

In diesem Zusammenhang ist es vorteilhaft, wenn das Hauptventilglied durch die gedrosselte Zuströmung allmählich in die Offenstellung umgeschaltet wird, wobei der Druckaufbau im Sekundärkanal nicht über eine parallele Drosseleinrichtung stattfindet, sondern durch den vom Hauptventilglied zunehmend mehr freigegebenen Überströmquerschnitt hinweg, sodass die Drosselungsfunktion praktisch in das Hauptventilglied verlagert ist.

In die im zeitgesteuerten Betriebsmodus vorhandene Fluidverbindung zwischen der Drosseleinrichtung und dem Hauptventilglied ist zweckmäßigerweise noch eine weitere, als Zusatz-Drosseleinrichtung bezeichnete Drosseleinrichtung eingeschaltet. Die von dieser zugelassene Strömungsrate ist vorzugsweise geringer als diejenige der vorgeschalteten Drosseleinrichtung. Da im zeitgesteuerten Betriebsmodus das zum Aufbau der erforderlichen Öffnungskraft erforderliche Fluidvolumen üblicherweise wesentlich geringer ist als während des sekundärdruckgesteuerten Betriebsmodus, kann auf diese Weise eine auf den jeweiligen Anwendungsfall abgestimmte Vorgabe der Druckaufbauzeit stattfinden.

Die für den zeitgesteuerten Betriebsmodus angestrebte kräftemäßige Wirkungslosigkeit des Sekundärdruckes bezüglich des Hauptventilgliedes kann insbesondere dadurch erreicht werden, dass der Sekundärdruck zusätzlich zu der während des sekundärdruckabhängigen Betriebsmodus von ihm beaufschlagten Öffnungsfläche des Hauptventilgliedes auch noch einer entgegengesetzt orientierten, gleichgroßen Kompensationsfläche des Hauptventilgliedes auferlegt wird. Dadurch ist das Hauptventilglied hinsichtlich des- Sekundärdruckes druckkraftausgeglichen.

Bei einer weiteren Ausführungsform der Softstart-Ventileinrichtung erfolgt während des zeitgesteuerten Betriebsmodus die für die Erzeugung der Öffnungskraft verantwortliche gedrosselte Zuströmung des Druckmediums über eine als weitere Drosseleinrichtung bezeichnete Drosseleinrichtung hinweg, die zusätzlich zu derjenigen Drosseleinrichtung vorhanden ist, über die während des sekundärdruckabhängigen Betriebsmodus der Druckaufbau im Sekundärkanal stattfindet. Hierbei ist dann aber die während des sekundärdruckabhängigen Betriebsmodus vorhandene Fluidverbindung zwischen dem Sekundärkanal und dem Hauptventilglied unterbrochen.

In allen Fällen ist zweckmäßigerweise vorgesehen, dass die auf das Hauptventilglied wirkende Schließkraft zumindest überwiegend aus einem fluidischen Steuerdruck resultiert, der insbesondere von einem aus dem Primärkanal abgezweigten Druckmedium gebildet ist. Der Steuerdruck kann insbesondere dem Primärdruck entsprechen. Aus Stabilitätsgründen wird sich gleichwohl in der Regel eine zusätzliche Federeinrichtung mit geringer Stellkraft empfehlen.

Zum Ein- und Ausschalten der Softstart-Funktion enthält die Softstart-Ventileinrichtung zweckmäßigerweise eine dem Sekundärkanal zugeordnete Steuerventileinrichtung. Sie kann wahlweise in einer den Fluiddurchgang ermöglichenden Arbeitsstellung bei eingeschaltetem Ventil oder in einer Ablassstellung bei ausgeschaltetem Ventil positioniert werden. In der Ablassstellung erfolgt eine Druckentlastung, insbesondere eine Entlüftung des Sekundärkanals zur Atmosphäre.

Die Steuerventileinrichtung kann prinzipiell manuell aktivierbar ausgeführt sein. Besonders empfehlenswert ist jedoch eine Betätigung mittels eines elektrisch ansteuerbaren Hilfsventils.

Sofern die Umschaltmittel ein Umschaltventil beinhalten, ist ebenfalls zweckmäßigerweise eine manuelle oder elektrische Betätigungsart vorgesehen.

Nachfolgend wird die Erfindung anhand der beiliegenden Zeichnung näher erläutert. In dieser zeigen:
- Figur 1: Eine bevorzugte erste Bauform der erfindungsgemäßen Softstart-Ventileinrichtung, abgebildet als Schal- tungsschema, und
- Figuren 2 bis 7: eine alternative Ausführungsform der Softstart-Ventileinrichtung im Längs- schnitt während verschiedener Betriebs- phasen, wobei

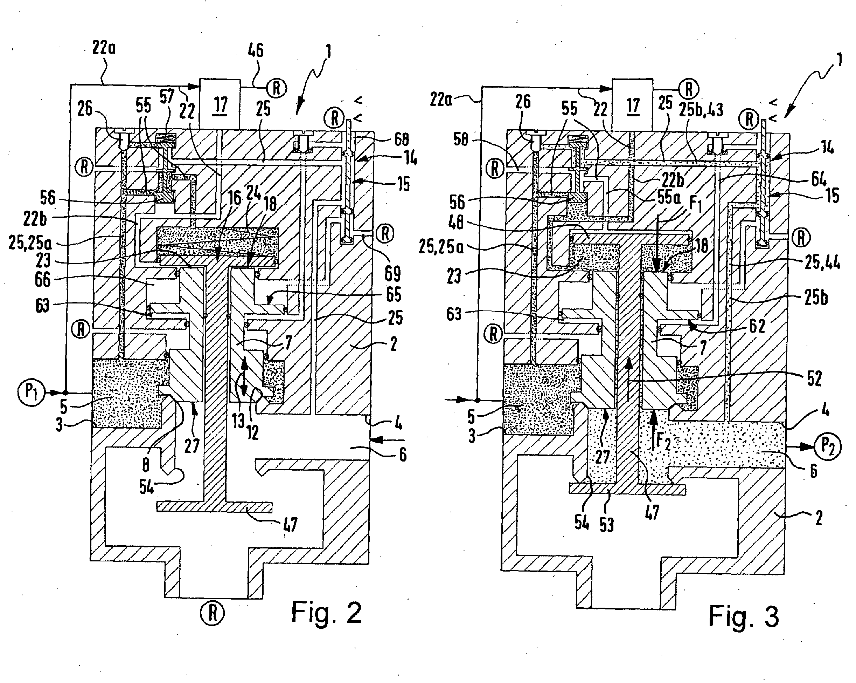

- Figuren 2 bis 4: den sekundärdruckgesteuerten Betriebsmo- dus zeigen und

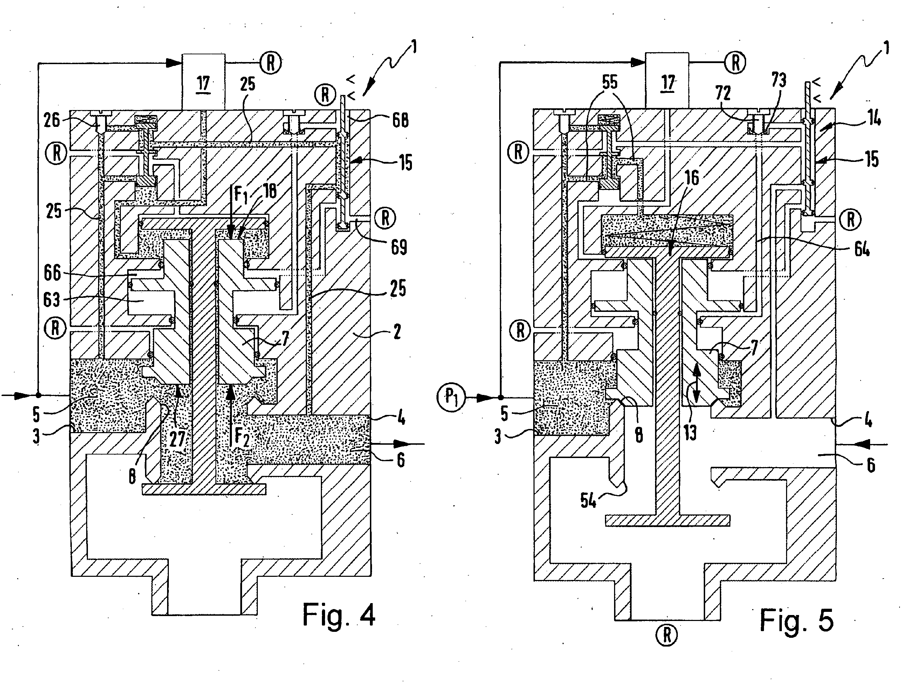

- Figuren 5 bis 7: den zeitgesteuerten Betriebsmodus illustrieren.

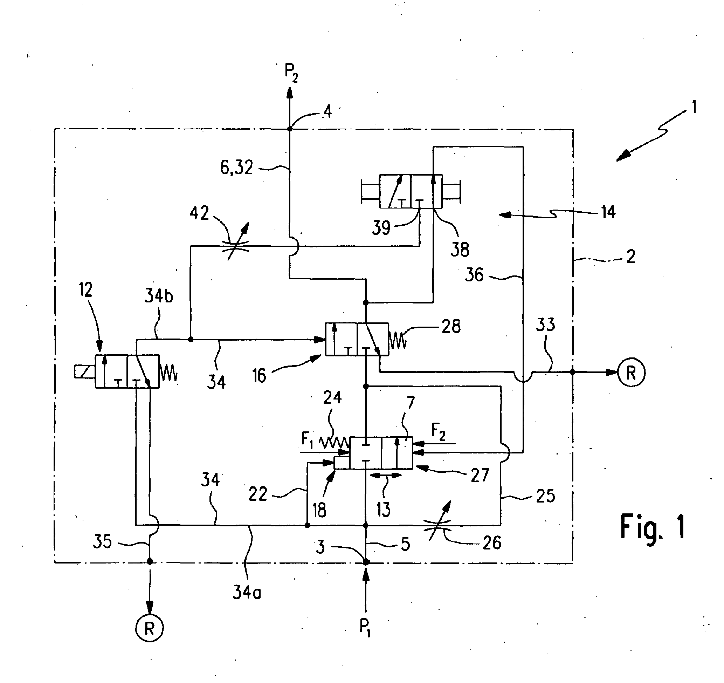

Sowohl das aus Figur 1 ersichtliche erste Ausführungsbeispiel wie auch das aus Figuren 2 bis 7 ersichtliche zweite Ausführungsbeispiel der insgesamt mit Bezugsziffer 1 bezeichneten Softstart-Ventileinrichtung ist als Ventileinheit ausgeführt, in der sämtliche Komponenten nach Art einer Baugruppe zusammengefasst sind. Dies begünstigt die Installation am Einsatzort und insbesondere auch die Integration als Modul in eine modular aufgebaute, zur Aufbereitung von Druckluft eingesetzte Druckluft-Wartungsvorrichtung.

Die im folgenden zur Vereinfachung auch nur als "Softstart-Ventil" bezeichnete Softstart-Ventileinrichtung 1 enthält ein bei dem Ausführungsbeispiel der Figur 1 nur strichpunktiert angedeutetes Gehäuse 2, an dem ein fluidischer Einlassanschluss 3 sowie ein fluidischer Auslassanschluss 4 ausgebildet sind.

Der Einlassanschluss 3 gehört zu einem in dem Gehäuse 2 verlaufenden Primärkanal 5 und ermöglicht den Anschluss einer nicht näher dargestellten Druckquelle, die ein unter einem Primärdruck P₁ stehendes fluidisches Druckmedium liefert, bei dem es sich insbesondere um Druckluft handelt. Alternativ kann das Softstart-Ventil 1 auch mit einem anderen Gas oder mit einem fluidischen Druckmedium betrieben werden.

Der Auslassanschluss 4 gehört zu einem im Gehäuse 2 verlaufenden Sekundärkanal 6, über den das über den Primärkanal 5 eingespeiste Druckmedium das Softstart-Ventil 1, unter einem Sekundärdruck P₂ stehend, wieder verlässt, um einem oder mehreren nicht weiter dargestellten Verbrauchern zugeführt zu werden. Bei dem mindestens einen Verbraucher handelt es sich beispielsweise um ein Ventil, einen mit Fluidkraft betriebenen Antrieb oder sonstiges.

In die Verbindung zwischen Primärkanal 5 und Sekundärkanal 6 ist ein, bevorzugt linear, bewegliches Hauptventilglied 7 eingeschaltet. Dieses steuert eine zugeordnete, lediglich beim zweiten Ausführungsbeispiel näher bezeichnete Überströmöffnung 8. Dabei kann das Hauptventilglied 7 als Ventilschieber mit umfangsseitiger Absperrfläche ausgebildet sein oder - bevorzugt - wie bei den Ausführungsbeispielen als Sitzventilglied, das mit einem die Überströmöffnung 8 umrahmenden Ventilsitz 12 kooperieren kann.

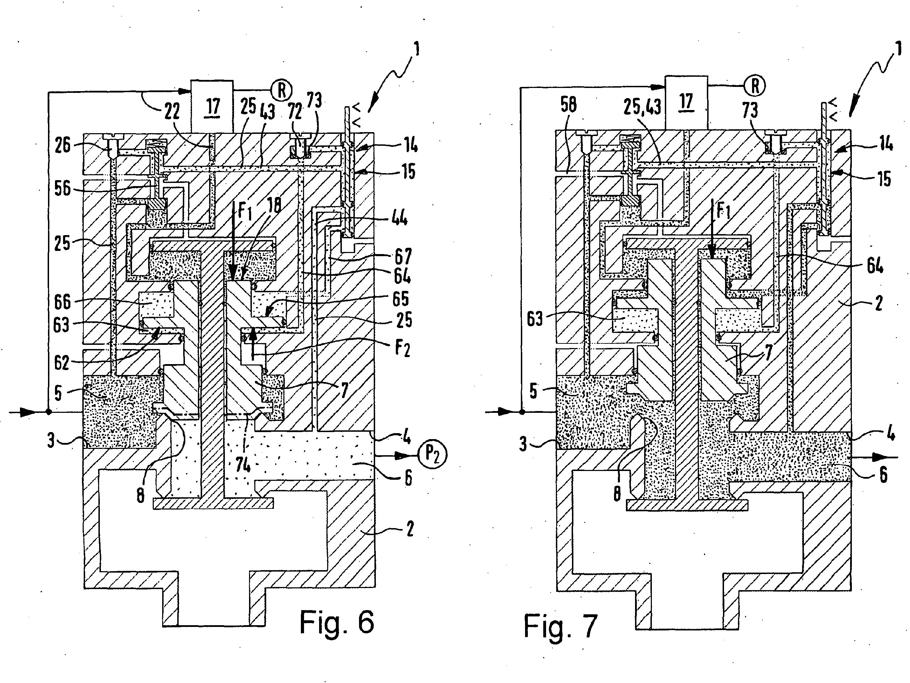

Das Hauptventilglied 7 ist unter Ausführung einer durch einen Doppelpfeil angedeuteten linearen Umschaltbewegung 13 zwischen einer aus Figuren 1 bis 3, 5 und 6 ersichtlichen Schließstellung sowie einer aus Figuren 4 und 7 ersichtlichen Offenstellung umschaltbar. In der Schließstellung ist die direkte Fluidverbindung zwischen Primärkanal 5 und Sekundärkanal 6 abgesperrt, in der Offenstellung freigegeben.

Die Softstart-Ventile 1 sind so ausgelegt, dass ab einem Einschaltzeitpunkt, bei zunächst noch geschlossenem Hauptventilglied 7, Druckmedium aus dem Primärkanal 5 gedrosselt in den Sekundärkanal 6 überströmt, um dort einen allmählichen Druckaufbau hervorzurufen. Erst wenn sich dadurch der Sekundärdruck an die Höhe des Primärdruckes angenähert oder diesen erreicht hat, wird das Hauptventilglied 7 zur Freigabe des vollen Durchflussquerschnittes geöffnet. Dabei kann das Softstart-Ventil 1 wahlweise in einem von zwei Betriebsmodi betrieben werden, entweder in einem sekundärdruckgesteuerten Betriebsmodus oder in einem zeitgesteuerten Betriebsmodus. Im erstgenannten Fall schaltet das Hauptventilglied 7 in Abhängigkeit von der Höhe des Sekundärdruckes in die Offenstellung um, unabhängig davon, welche Zeit hierbei verstreicht. Es kann ein Grenzwert des Sekundärdruckes vorgegeben werden, bei dessen Erreichen das Hauptventilglied 7 in die Offenstellung schaltet. Im zweitgenanten Fall findet das Umschalten des Hauptventilgliedes 7 in die Offenstellung rein zeitabhängig statt, also nach Verstreichen einer vorgegebenen Zeitspanne, unabhängig von dem im Sekundärkanal 6 herrschenden Druck.

Das Softstart-Ventil 1 ist mit Umschaltmitteln 14 ausgestattet, die ein Umschalten zwischen den beiden Betriebsmodi ermöglichen. Eine wesentliche Komponente der Umschaltmittel 14 ist dabei bei beiden Ausführungsbeispielen ein Umschaltventil 15, das wahlweise in eine erste Schaltstellung für den sekundärdruckgesteuerten Betriebsmodus oder in eine zweite Schaltstellung für den zeitgesteuerten Betriebsmodus verbringbar ist, wobei es in diesen Schaltstellungen unterschiedliche interne fluidische Verschaltungen des Softstart-Ventils hervorruft, die entweder eine sekundärdruckabhängige oder eine zeitabhängige Generierung einer das Hauptventilglied 7 entgegen einer Schließkraft F₁ in die Offenstellung umschaltenden Öffnungskraft F₂ bewirken.

Für das Ein- und Ausschalten der Softstart-Ventileinrichtung i ist eine Steuerventileinrichtung 16 vorhanden. Deren Umschalten in eine Arbeitsstellung stellt den für den Beginn der Softstart-Funktionalität maßgeblichen Einschaltzeitpunkt dar. Es kann sich dabei ohne weiteres um eine durch rein manuelle Krafteinwirkung schaltbare Steuerventileinrichtung handeln. Vorzugsweise ist ihr zu ihrer Betätigung jedoch ein elektrisch ansteuerbares Hilfsventil 17 zugeordnet, das praktisch als Vorsteuerventil für die Steuerventileinrichtung fungieren kann. Beispielhaft handelt es sich um ein elektrisch betätigbares 3/2-Wegeventil, insbesondere um ein Magnetventil.

Um die Schließkraft F₁ hervorzurufen, ist das Hauptventilglied 7 mit einer Schließfläche 18 versehen, die von einem unter einem gewissen Steuerdruck stehenden Steuerfluid beaufschlagbar ist. Bei beiden Ausführungsbeispielen ist das Steuerfluid von Druckmedium gebildet, das aus dem Primärkanal 5 abgezweigt ist. Der Steuerdruck entspricht daher zweckmäßigerweise dem Primärdruck.

Der Steuerdruck wird der Schließfläche 18 über einen ersten Beaufschlagungskanal 22 aufgeschaltet. Bei dem Ausführungsbeispiel der Figur 1 erfolgt dies durch eine direkte Verbindung zwischen der Schließfläche 18 und dem Primärkanal 5, sodass die Schließkraft unabhängig vom Schaltzustand des Hilfsventils 17 immer dann vorhanden ist, wenn der Primärkanal 5 unter Druck steht.

Bei dem Ausführungsbeispiel der Figuren 2 bis 7 ist das Hilfsventil 17 in den Verlauf des ersten Beaufschlagungskanals 22 eingeschaltet. Ein Eingangszweig 22a des Beaufschlagungskanals 22 verbindet den Primärkanal 5 mit dem Eingang des Hilfsventils 17, während ein Ausgangszweig 22b des ersten Beaufschlagungskanals 22 den Ausgang des Hilfsventils 17 mit einer ersten Beaufschlagungskammer 23 verbindet, die unter anderem von der Schließfläche 18 begrenzt ist: In der unbetätigten Grundstellung des Hilfsventils 17 ist die Verbindung zwischen dem Eingangszweig 22a und dem Ausgangszweig 22b unterbrochen, sodass das Hauptventilglied 7 nicht von einem fluidischen Schließdruck beaufschlagt ist. Dies ist erst der Fall, wenn das Hilfsventil 17 in eine betätigte Offenstellung umgeschaltet wird, in der die beiden Kanalzweige 22a, 22b miteinander verbunden sind.

Die Schließstellung ist gleichzeitig die Grundstellung des Hauptventilgliedes 7. Sie wird von dem Hauptventilglied 7 im komplett drucklosen Zustand des Softstart-Ventils 1 eingenommen. Garant hierfür ist eine erste Federeinrichtung 24, die das Hauptventilglied 7 in der Schließrichtung beaufschlagt.

Bei dem Ausführungsbeispiel der Figur 1 wirkt die erste Federeinrichtung 24 ständig in Schließrichtung auf das Hauptventilglied 7 ein. Bei dem Ausführungsbeispiel der Figuren 2 bis 7 beschränkt sich die Schließwirkung der ersten Federeinrichtung 24 auf den Zustand, wenn die Steuerventileinrichtung 16 ihre Ablassstellung einnimmt.

Bei beiden Ausführungsbeispielen erfolgt der allmähliche Druckaufbau im Sekundärkanal zumindest während der sekundärdruckgesteuerten Betriebsphase über einen das Hauptventilglied 7 umgehenden Umgehungskanal 25 hinweg, in den eine, zweckmäßigerweise einstellbare, Drosseleinrichtung 26 eingeschaltet ist. Die Drosseleinrichtung 26 begrenzt die Strömungsrate, sodass die Zuströmung des Druckmediums in den Sekundärkanal 6 langsamer stattfindet als bei geöffnetem Hauptventilglied 7.

Bei beiden Ausführungsbeispielen ist an dem Hauptventilglied 7 eine in die entgegengesetzte Richtung wie die Schließfläche 18 weisende, als Öffnungsfläche 27 bezeichnete Beaufschlagungsfläche ausgebildet, die zumindest während des primärdruckgesteuerten Betriebsmodus von einem allmählich ansteigenden Betätigungsdruck beaufschlagt wird, aus dem die Öffnungskraft F₂ resultiert. Ist diese Öffnungskraft F₂ größer als die entgegengesetzt wirksame Schließkraft F₁, schaltet das Hauptventilglied 7 in die Offenstellung um.

Bei beiden Ausführungsbeispielen ist der während des sekundärdruckgesteuerten Betriebsmodus auf die Öffnungsfläche 27 einwirkende Betätigungsdruck von dem sich im Sekundärkanal 6 allmählich aufbauenden Sekundärdruck abgeleitet, wobei er diesem Sekundärdruck zweckmäßigerweise entspricht. Das Druckmedium kann hierbei direkt aus dem Sekundärkanal 6 abgegriffen werden.

Die beiden Ausführungsbeispiele werden im folgenden getrennt weiter erläutert, sofern im Einzelfall nichts anderes erwähnt ist.

Bei dem Ausführungsbeispiel der Figur 1 ist in den Verlauf des Sekundärkanals 6 die Steuerventileinrichtung 16 eingeschaltet. Durch Federmittel 28 ist sie in die aus der Zeichnung ersichtliche Ablassstellung vorgespannt, in der sie den Durchgang durch den Sekundärkanal 6 unterbricht und gleichzeitig den zum Auslassanschluss 4 führenden endseitigen Kanalast 32 des Sekundärkanals 6 mit einem zur Atmosphäre R führenden Ablasskanal 33 verbindet. Der Umgehungskanal 25 mündet zwischen dem Hauptventilglied 7 und der Steuerventileinrichtung 16 in den Sekundärkanal 6 ein und ist in der Ablassstellung der Steuerventileinrichtung 16 abgesperrt.

Die Steuerventileinrichtung 16 ist durch ein fluidisches Drucksignal in seine Arbeitsstellung umschaltbar, in der es den Fluiddurchgang durch den Sekundärkanal 6 freigibt und gleichzeitig den Ablasskanal 33 abtrennt. Das fluidische Drucksignal ist über einen aus dem Primärkanal 5 abgezweigten Steuerkanal 34 zuführbar, in dessen Verlauf das Hilfsventil 17 eingeschaltet ist. In der unbetätigten Grundstellung des Hilfsventils 17 ist der Steuerkanal 34 unterbrochen-und der zur Steuerventileinrichtung 16 führende endseitige Kanalast 34b steht über einen Ablasskanal 35 mit der Atmosphäre R in Verbindung.

In der betätigten Offenstellung des Hilfsventils 17 ist der Durchgang durch den Steuerkanal 34 freigegeben und der Ablasskanal 35 abgesperrt.

Der erste Beaufschlagungskanal 22 kann aus dem anfänglichen Kanalast 34a des Steuerkanals 34 abgezweigt sein.

Bei beiden Betriebsmodi wird der Betätigungsdruck der Öffnungsfläche 27 über einen Betätigungskanal 36 aufgeschaltet. Dieser ist andernends an den.Ausgang 37 des Umschaltventils 15 angeschlossen.

Das Umschaltventil 15 verfügt über zwei Eingänge 38, 39, von denen der erste Eingang 38 direkt an den Sekundärkanal 6 angeschlossen ist, und zwar insbesondere an den endseitigen Kanalast 32. Der zweite Eingang 39 steht unter Zwischenschaltung einer weiteren Drosseleinrichtung 42 mit dem endseitigen Kanalast 34a des Steuerkanals 34 in Verbindung.

Im Betrieb des Softstart-Ventils 1, wenn das Hilfsventil 17 die Offenstellung und mithin die Steuerventileinrichtung 16 die Arbeitsstellung einnimmt, liegt an dem ersten Eingang 38 der Sekundärdruck an, während der zweite Eingang 39 über die weitere Drosseleinrichtung 42 mit Druckmedium aus dem Primärkanal 5 gespeist wird. Ist kein Hilfsventil 17 vorhanden, kann der die weitere Drosseleinrichtung 42 enthaltende Kanal auch direkt an den Primärkanal 5 angeschlossen sein.

Das Umschaltventil 15 kann wahlweise in der aus der Zeichnung ersichtlichen ersten Schaltstellung für sekundärdruckgesteuerte Betriebsweise oder in einer zweiten Schaltstellung für zeitgesteuerte Betriebsweise positioniert werden. Exemplarisch erfolgt die Betätigung manuell, wenngleich auch beispielsweise eine elektrische Betätigungsweise möglich wäre. Das Umschaltventil 15 ist ein bistabiles Ventil und verharrt daher selbsttätig in der jeweils eingestellten Position.

Die weitere Drosseleinrichtung 42 ist in ihrer Drosselungsintensität zweckmäßigerweise einstellbar ausgebildet.

In der Regel wird man das Softstart-Ventil 1 mit einer dahingehenden Auslegung betreiben, dass an der weiteren Drosseleinrichtung 42 eine stärkere Drosselung stattfindet als an der dem Hauptventilglied 7 zugeordneten Drosseleinrichtung 26.

Der Schaltzustand des Umschaltventils 15 wirkt sich nicht auf die Fluidbeaufschlagung der Schließfläche 18 aus. Dort steht stets der die Schließkraft F₁ hervorrufende Steuerdruck an, vorliegend also der Primärdruck. Abhängig von der Schaltstellung des Umschaltventils 15 ändert sich jedoch die Fluidbeaufschlagungsquelle für die Öffnungsfläche 27. Diese wird in der ersten Schaltstellung des Umschaltventils 15 aus dem Sekundärkanal 6 gespeist und in der zweiten Schaltstellung, über die weitere Drosseleinrichtung 42 hinweg, aus dem Primärkanal 1. Die jeweils andere Fluidbeaufschlagungsquelle ist hierbei von der Öffnungsfläche 27 bzw. dem Betätigungskanal 36 abgetrennt.

Um das Softstart-Ventil 1 der Figur 1 sekundärdruckgesteuert zu betreiben, wird das Umschaltventil 15 in die erste Schaltstellung verbracht. Dadurch ist der Sekundärdruck an die Öffnungsfläche 27 aufgeschaltet und das Hauptventilglied 7 schaltet erst aus der bis dahin eingenommenen Schließstellung in die Offenstellung um, wenn sich eine Öffnungskraft F₂ einstellt, die größer ist als die entgegengesetzte Schließkraft. Durch die Wahl entsprechender Flächenverhältnisse zwischen Öffnungsfläche 27 und Schließfläche 18 kann der Grenzwert des Sekundärdruckes bestimmt werden, bei dem das Umschalten stattfindet. Empfehlenswert ist die Einstellung eines Grenzwertes, der der Hälfte des Primärdruckes entspricht.

Um das Softstart-Ventil 1 zeitgesteuert zu betreiben, wird das Umschaltventil 15 in die zweite Schaltstellung umgeschaltet. Somit hat der Sekundärdruck keinen Einfluss mehr auf das Umschaltverhalten des Hauptventilglieds 7. Als Betätigungsdruck fungiert nun der nach der weiteren Drosseleinrichtung 42 anstehende Druck, der zeitabhängig allmählich in dem Maße zunimmt, wie Druckmedium über die weitere Drosseleinrichtung 42 aus dem Primärkanal 5 zu der Öffnungsfläche 27 strömt. Wiederum schaltet das Hauptventilglied 7 in die Offenstellung, wenn der Betätigungsdruck den durch das Flächenverhältnis vorbestimmten Grenzwert erreicht hat.

Zum Abschalten des Softstart-Ventils 1 wird das Hilfsventil 17 in die Grundstellung zurückgeschaltet. Dadurch findet über den Steuerkanal 34 und den Ablasskanal 35 eine Druckentlastung des zweiten Einganges 39 statt, sowie ein Abbau des für die Arbeitsstellung der Steuerventileinrichtung 16 verantwortlichen fluidischen Drucksignals. Letzteres führt zu einem Umschalten der Steuerventileinrichtung 16 in die Ablassstellung, sodass der zu dem Auslassanschluss 4 führende endseitige Kanalast 32 des Sekundärkanals 6 sowie der erste Eingang 38 über den Ablasskanal 33 druckentlastet werden.

Unabhängig davon, welche Position das Umschaltventil 15 bei diesem Abschalten des Softstart-Ventils 1 einnimmt, findet somit eine Druckentlastung des Betätigungskanals 36 und somit der Öffnungsfläche 27 statt, sodass das Hauptventilglied 7 wieder in die Schließstellung zurückkehrt.

Ersichtlich besteht ein wesentliches Merkmal des Softstart-Ventils 1 darin, dass der Sekundärdruck während des zeitgesteuerten Betriebsmodus bezüglich des Hauptventilgliedes 7 kräftemäßig wirkungslos geschaltet ist und das Hauptventilglied 7 stattdessen zur Erzeugung der Öffnungskraft von einem ohne Verbindung zum Sekundärkanal gedrosselt zuströmenden Druckmedium beaufschlagt wird. Dies gilt im übrigen auch für das im folgenden beschriebene zweite Ausführungsbeispiel der Figuren 2 bis 7.

Bei diesem zweiten Ausführungsbeispiel ist das Umschaltventil 15 in den Verlauf des Umgehungskanals 25 eingeschaltet, und zwar in den der Drosseleinrichtung 26 zum Sekundärkanal 6 hin nachgeordneten endseitigen Kanalast 25b. Es unterteilt diesen endseitigen Kanalast 25b in einen zu der Drosseleinrichtung 26 führenden ersten Kanalastabschnitt 43 sowie einen in den Sekundärkanal 6 mündenden zweiten Kanalastabschnitt 44. Das Umschaltventil 15 kann die aus Figuren 2 bis 4 ersichtliche erste Schaltstellung für sekundärdruckgesteuerten Betrieb einnehmen, in der es die beiden Kanalastabschnitte 43, 44 miteinander verbindet und somit eine das Hauptventilglied 7 umgehende Fluidverbindung schafft, über die hinweg eine gedrosselte Fluidströmung in den Sekundärkanal 6 stattfinden kann. Dabei wirkt der aktuelle Sekundärdruck als Betätigungsdruck auf die Öffnungsfläche 27, die zweckmäßigerweise von der die Überströmöffnung 8 abschließenden Stirnfläche des Hauptventilgliedes 7 gebildet ist.

Übersteigt die Öffnungskraft F₂ die entgegengesetzt wirksame Schließkraft F₁, schaltet das bis dahin gemäß Figur 3 in Schließstellung befindliche Hauptventilglied 7 in die aus Figur 4 ersichtliche Offenstellung um. Wie beim Ausführungsbeispiel der Figur 1 kann durch das Flächenverhältnis zwischen Öffnungsfläche 27 und Schließfläche 18 ein Grenzwert des Sekundärdruckes definiert werden, bei dem das Hauptventilglied 7 in die Offenstellung bewegt wird.

Die Schließfläche 18 ist bei dem Ausführungsbeispiel der Figuren 2 bis 7 zweckmäßigerweise an der der Öffnungsfläche 27 entgegengesetzten Stirnfläche des Hauptventilgliedes 7 ausgebildet. Sie begrenzt die erste Beaufschlagungskammer 23, die, unter Zwischenschaltung des Hilfsventils 17, über den schon erwähnten ersten Beaufschlagungskanal 22 mit dem Primärkanal 5 verbunden ist. Das Hilfsventil 17 weist außerdem einen zur Atmosphäre führenden Ablasskanal 46 auf. Befindet sich das Hilfsventil 17 in der aus Figuren 2 und 5 ersichtlichen unbetätigten Grundstellung, ist der zwischen der ersten Beaufschlagungskammer 23 und dem Hilfsventil 17 verlaufende endseitige Kanalast 22b des ersten Beaufschlagungskanals 22 über den Ablasskanal 46 druckentlastet, wobei gleichzeitig der zum Primärkanal 5 führende anfängliche Kanalast 22a abgetrennt ist.

In der betätigten Offenstellung des Hilfsventils 17 ergibt sich der aus Figuren 3, 4, 6 und 7 ersichtliche Zustand, bei dem die erste Beaufschlagungskammer 23 aus dem Primärkanal 5 mit einem die Schließkraft F₁ hervorrufenden Steuerdruck beaufschlagt ist, wobei dieser Steuerdruck hier dem Primärdruck entspricht.

Bei dem zweiten Ausführungsbeispiel hat der erste Beaufschlagungskanal 22 eine Doppelfunktion. Er fungiert, vergleichbar dem Steuerkanal 34 des ersten Ausführungsbeispiels, auch als Kanal, über den hinweg die Steuerventileinrichtung 16 betätigt wird.

Die Steuerventileinrichtung 16 enthält bei dem zweiten Ausführungsbeispiel des Softstart-Ventils 1 ein das Hauptventilglied 7 bevorzugt koaxial durchsetzendes Steuerventilglied 47, das relativ zu dem Hauptventilglied 7 parallel zur Richtung der Umschaltbewegung 13 zwischen zwei Schaltstellungen umschaltbar ist. Ein der Schließfläche 18 gegenüberliegender, beispielsweise tellerförmig ausgebildeter Betätigungsabschnitt 48 des Steuerventilgliedes 47 bildet wie das Hauptventilglied 7 einen beweglichen Wandabschnitt der ersten Beaufschlagungskammer 23 und wird von dem in der ersten Beaufschlagungskammer 23 befindlichen Fluid in einer Schließrichtung 52 beaufschlagt. Das Steuerventilglied 47 verlagert sich dadurch in die schon erwähnte Arbeitsstellung, in der es mit einem dem Hauptventilglied 7 auf der entgegengesetzten Seite wie der Betätigungsabschnitt 48 axial gegenüberliegenden Verschlussabschnitt 53 eine mit dem Sekundärkanal 6 kommunizierende Ablassöffnung 54 verschließt (vgl. Figuren 3, 4, 6 und 7)

Im drucklos geschalteten Zustand der ersten Beaufschlagungskammer 23 nimmt das Steuerventilglied 47 unter Mitwirkung der schon erwähnten ersten Federeinrichtung 24 die aus Figuren 2 und 5 ersichtliche Ablassstellung ein, in der sein Verschlussabschnitt 53 von der Ablassöffnung 54 abgehoben ist, sodass der Sekundärkanal 6 mit der Atmosphäre R verbunden ist.

Steht im Primärkanal 5 der Primärdruck an und befindet sich das Hilfsventil 17 in der unbetätigten Grundstellung, wird das Steuerventilglied 47 zusätzlich durch ein fluidisches Drucksignal in der Ablassstellung gehalten. Dieses beaufschlagt den Betätigungsabschnitt 48 an der der ersten Beaufschlagungskammer 23 entgegengesetzten Seite, und zwar über einen aus dem anfänglichen Kanalast 25a des Umgehungskanals 25 abgezweigten Steuerkanal 55, in dessen Verlauf ein Zusatz-Hilfsventilglied 56 eingeschaltet ist.

Das Zusatz-Hilfsventilglied 56 ist so ausgebildet, dass es zwischen zwei Schaltstellungen umschaltbar ist. Auf es einwirkende Federmittel 57 halten es in der ersten Schaltstellung, wenn das Hilfsventil 17 unbetätigt ist. Hierbei ist der Durchgang durch den Steuerkanal 55 offen und das das Steuerventilglied 47 in der Ablassstellung haltende fluidische Drucksignal steht an. Diese erste Schaltstellung geht aus Figuren 2 und 5 hervor.

Ist das Hilfsventil 17 betätigt, wirkt der im endseitigen Kanalast 22b des ersten Beaufschlagungskanals 22 herrschende Druck entgegengesetzt zu den Federmitteln 57 auf das Zusatz-Hilfsventilglied 56 ein und schaltet dieses in die aus Figuren 3, 4, 6 und 7 ersichtliche zweite Schaltstellung um, in der der Durchgang durch den Steuerkanal 55 abgesperrt und der zu dem Betätigungsabschnitt 48 führende Kanalast 55a des Steuerkanals 55 über einen Ablasskanal 58 mit der Atmosphäre R verbunden ist. Somit erfolgt beim Umschalten des Hilfsventils 17 durch Zusammenwirken mit dem zusatz-Hilfsventilglied 56 stets eine gegensinnige Fluidbeaufschlagung des Steuerventilgliedes 47.

Das Zusatz-Hilfsventilglied 56 hat eine Doppelfunktion, indem es außerdem den Fluiddurchgang durch den ersten Kanalabschnitt 43 des anfänglichen Kanalastes 25b des Umgehungskanals 25 steuert. In der ersten Schaltstellung gemäß Figuren 3 und 5 ist der Fluiddurchgang unterbrochen und gleichzeitig der zum Umschaltventil 15 führende Kanalabschnitt über den Ablasskanal 58 druckentlastet. In der zweiten Schaltstellung ist die Fluidverbindung offen.

Zusätzlich zu der Öffnungsfläche 27, die im folgenden auch als erste Öffnungsfläche 27 bezeichnet wird, ist an dem Hauptventilglied 7 axial beabstandet eine gleich orientierte zweite Öffnungsfläche 62 ausgebildet. Diese begrenzt mit dem Ventilgehäuse 2 eine Betätigungskammer 63, die über einen Betätigungskanal 64 mit dem Umschaltventil 15 verbunden ist.

Außerdem ist an dem Hauptventilglied 7 eine bezüglich der ersten Öffnungsfläche 27 entgegengesetzt orientierte Kompensationsfläche 65 vorhanden, die mit dem Ventilgehäuse 2 eine Kompensationskammer 66 begrenzt, welche über einen Kompensationskanal 67 ebenfalls an das Umschaltventil 15 angeschlossen ist.

Die Kompensationsfläche 65 ist gleich groß wie die erste Öffnungsfläche 27.

In der den sekundärdruckgesteuerten Betriebsmodus vorgebenden ersten Schaltstellung des Umschaltventils 15 (Figuren 2 bis 4) hat das Umschaltventil 15 den Durchgang durch den Umgehungskanal 25 freigeschaltet, indem es die beiden Kanalabschnitte 43, 44 miteinander verbunden hat. Gleichzeitig sind die Betätigungskammer 63 und die Kompensationskammer 66 über je eine Ablassöffnung 68, 69 zur Atmosphäre R druckentlastet.

In der den zeitgesteuerten Betriebsmodus vorgebenden zweiten Schaltstellung des Umschaltventils 15 (Figuren 5 bis 7) hat das Umschaltventil 15 den Kompensationskanal 67 mit dem zweiten Kanalabschnitt 54 des Umgehungskanals 25 verbunden, sodass in der Kompensationskammer 66 der gleiche Druck herrscht wie im Sekundärkanal 6 und folglich aufgrund der identischen Größe der ersten Öffnungsfläche 27 und der Kompensationsfläche 65 eine kräftemäßige Kompensation des Sekundärdruckes bezüglich dem Hauptventilglied 7 stattfindet. Der Sekundärdruck ist somit bezüglich dem Hauptventilglied 7 kräftemäßig wirkungslos geschaltet.

Gleichzeitig ist in der zweiten Schaltstellung des Umschaltventils 15 der Betätigungskanal 64 an den von der Drosseleinrichtung 26 kommenden ersten Kanalabschnitt 43 des Umgehungskanals 25 angeschlossen. Somit wird die zweite Öffnungsfläche 62 von dem über die Drosseleinrichtung 26 gedrosselt zuströmenden Druckmedium in Öffnungsrichtung beaufschlagt, woraus die Öffnungskraft F₂ resultiert. Durch Wahl eines geeigneten Flächenverhältnisses zwischen der zweiten Öffnungsfläche 62 und der entgegengesetzten Schließfläche 18 kann das Umschaltverhalten des Hauptventilgliedes 7 beeinflusst werden.

In den Verlauf des Betätigungskanals 64 ist zweckmäßigerweise noch eine Zusatz-Drosseleinrichtung 72 eingeschaltet, die die Strömungsrate des in die Betätigungskammer 63 zuströmenden Druckmediums begrenzt. Es handelt sich zweckmäßigerweise um eine hinsichtlich der Drosselungsintensität einstellbare Zusatz-Drosseleinrichtung 72.

Vorzugsweise ist der Zusatz-Drosseleinrichtung 72 ein Rückschlagventil 73 parallelgeschaltet. Dieses sperrt in Richtung zur Betätigungskammer 63 und lässt eine entgegengesetzte ungedrosselte Fluidströmung zu.

Das Umschaltventil kann wie abgebildet manuell betätigbar ausgebildet sein. Eine elektrisch betätigbare Variante wäre jedoch ebenfalls möglich. Jedenfalls empfiehlt sich eine Ausgestaltung als bistabiles Ventil, das auch ohne Auferlegung von Energie die jeweils eingestellte Schaltstellung bis zum neuerlichen Umschalten beibehält.

Zu der Schließfeder 24 ist noch zu sagen, dass diese im unbetätigten Zustand des Hilfsventils 17 über das Steuerventilglied 47 auf das Hauptventilglied 7 einwirken kann. Das von ihr beaufschlagte Steuerventilglied 47 drückt mit seinem Betätigungsabschnitt 48 auf die Schließfläche 18 und hält das Hauptventilglied 7 dadurch in der Schließstellung.

Nachstehend wird eine übliche Betriebsweise des aus Figuren 2 bis 7 ersichtlichen zweiten Ausführungsbeispiels der Softstart-Ventileinrichtung 1 erläutert.

Die Figuren 2 bis 4 zeigen das Softstart-Ventil 1 im sekundärdruckgesteuerten Betriebsmodus, also bei in der ersten Schaltstellung befindlichem Umschaltventil 15. Die Figuren 5 bis 7 zeigen den vom Sekundärdruck unabhängigen, rein zeitgesteuerten Betriebsmodus, hervorgerufen durch das in der zweiten Schaltstellung befindliche Umschaltventil 15.

Ist das Hilfsventil 17 unbetätigt, ergeben sich bei beiden Betriebsmodi übereinstimmende Grundzustände, welche aus Figuren 2 und 5 ersichtlich sind. Das im Primärkanal 5 anstehende Druckmedium wird von dem Zusatz-Hilfsventilglied 56 an einem Hindurchströmen durch den Umgehungskanal 25 gehindert und wird gleichzeitig dem Steuerventilglied 47 als fluidisches Drucksignal aufgeschaltet, sodass die Steuerventileinrichtung 16 die Ablassstellung einnimmt.

Der Sekundärkanal 6 ist folglich druckentlastet, das Hauptventilglied 7 befindet sich in der Schließstellung.

Der sekundärdruckabhängige Betriebsmodus stellt sich wie folgt dar (Figuren 3 und 4).

Mit der Betätigung des Hilfsventils 17 wird das Steuerventilglied 47 in die Arbeitsstellung umgeschaltet. Das Zusatz-Hilfsventilglied 56 öffnet den Durchgang durch den Umgehungskanal 25, sodass das Druckmedium - durch die Drosseleinrichtung 26 gedrosselt - durch den Umgehungskanal 25 hindurch, und dabei über das Umschaltventil 15 hinweg, in den Sekundärkanal 6 überströmt. Bedingt durch die Drosselung steigt der Sekundärdruck nur allmählich an, sodass die angeschlossenen Verbraucher relativ sanft mit Druck versorgt werden und keine unerwünschten Druckschläge auftreten.

Der allmählich ansteigende Sekundärdruck wirkt von Anfang an auf die erste Öffnungsfläche 27, wobei die von ihm ausgeübte Stellkraft der Schließkraft F₁ entgegenwirkt. Letztere resultiert aus dem in der ersten Beaufschlagungskammer 23 anstehenden, die Schließfläche 18 beaufschlagenden Primärdruck.

Übersteigt die aus dem Sekundärdruck resultierende Stellkraft die Öffnungskraft F₂, schaltet das Hauptventilglied 7 aus der in Figur 3 eingenommenen Schließstellung in die aus Figur 4 ersichtliche Offenstellung um. Da das Hauptventil 7 relativ zum Steuerventilglied 47 beweglich ist, wird letzteres durch diese Umschaltbewegung nicht beeinflusst.

Durch das nun geöffnete Hauptventil kann jetzt ungehindert die maximale Strömungsrate direkt zwischen dem Primärkanal 5 und dem Sekundärkanal 6 überströmen.

Um den Sekundärkanal 6 wieder vom Druck zu entlasten, genügt es, das Hilfsventil 17 zu deaktivieren. Es liegen dann wieder die aus Figur 2 ersichtlichen Verhältnisse vor.

Um in den zeitabhängigen Betriebsmodus zu wechseln, genügt ein einfaches Umschalten des Umschaltventils 15 in die aus Figuren 5 und 7 ersichtliche zweite Schaltstellung. Ausgehend von dem Grundzustand der Figur 5 ergibt sich in diesem Betriebsmodus bei Betätigung des Hilfsventils 17 der nachstehende Ablauf (Figuren 6 und 7).

Durch das Umschaltventil 15 ist der Umgehungskanal 25 unterbrochen, sodass durch ihn hindurch kein Fluidübertritt aus dem Primärkanal 5 in den Sekundärkanal 6 mehr möglich ist. Der in den Sekundärkanal 6 mündende zweite Kanalabschnitt 44 ist durch das Umschaltventil 15 mit der Kompensationskammer 66 verbunden, sodass der Sekundärdruck an dem Hauptventilglied 7 kräftemäßig kompensiert ist und keinerlei Auswirkungen mehr auf die Stellung des Hauptventilgliedes 7 hat.

Gleichzeitig ist der stromab der Drosseleinrichtung 26 liegende erste Kanalabschnitt 43 des Umgehungskanals 25 durch das Umschaltventil 15 mit der Betätigungskammer 63 verbunden: In diese strömt mithin gedrosselt Druckmedium aus dem Primärkanal 5 zu, das auf die zweite Öffnungsfläche 62 eine allmählich zunehmende Stellkraft ausübt.

Aufgrund dieser allmählichen Stellkraftzunahme führt das Hauptventilglied 7 eine kontinuierliche Öffnungsbewegung aus, bei der es den direkten Fluiddurchgang zwischen dem Primärkanal 5 und dem Sekundärkanal 6 allmählich mehr und mehr freigibt. Bei 74 ist eine beliebige Zwischenstellung des Hauptventilgliedes 7 angedeutet, die dieses auf dem Weg in die aus Figur 7 ersichtliche Offenstellung zeitweilig einnimmt.

Bei diesem allmählichen Öffnen des Hauptventilgliedes 7 steigt der Sekundärdruck langsam an und bewirkt eine sanfte Druckbeaufschlagung der angeschlossenen Verbraucher.

Erst wenn aufgrund der Druckbeaufschlagung der Betätigungskammer 63 die durch das Flächenverhältnis zwischen zweiter Öffnungsfläche 62 und Schließfläche 18 bestimmte Öffnungskraft F₂ erreicht ist, schaltet das Hauptventilglied 7 in die aus Figur 7 ersichtliche Offenstellung um, sodass nun ein ungedrosselter, direkter Fluidübertritt zwischen dem Primärkanal 5 und dem Sekundärkanal 6 möglich ist.

Das Öffnen des Hauptventilgliedes 7 findet in diesem Betriebsmodus rein zeitabhängig statt, also abhängig von der Zeit, die das über die beiden Drosseleinrichtungen 26, 73 in die Betätigungskammer 63 zuströmende Druckmedium benötigt, um in der Betätigungskammer 63 den erforderlichen Öffnungsdruck aufzubauen. Auf diese Weise kann ein zuverlässiges Öffnen auch dann gewährleistet werden, wenn der Aufbau des Sekundärdruckes 6 aufgrund irgendwelcher Umstände nur sehr schleppend vonstatten geht. Es kann auch unter diesen ungünstigen Umständen in annehmbarer Zeit ein Umschalten in die Offenstellung bewirkt werden.

Da die Zusatz-Drosseleinrichtung 72 in dem Betätigungskanal 64 angeordnet ist, ist sie nur im zeitgesteuerten Betriebsmodus wirksam. Dadurch kann für diesen Modus eine eigene Strömungsrate eingestellt werden, die in der Regel wesentlich kleiner ist als diejenige, die für den sekundärdruckabhängigen Betrieb benötigt und dort durch die Drosseleinrichtung 26 vorgegeben wird. Die unterschiedlichen Strömungsraten sind anzustreben, weil das im zeitabhängigen Betriebsmodus zum Hervorrufen der Umschaltbewegung des Hauptventilgliedes 7 zu befüllende Volumen - die Kompensationskammer 66 - wesentlich kleiner ist als das im sekundärdruckabhängigen Betrieb zu füllende Volumen, nämlich die an den Sekundärkanal 6 angeschlossenen Verbraucher.

Auch im zeitgesteuerten Betriebsmodus kann der aus Figur 5 ersichtliche Grundzustand sehr einfach dadurch wieder hergestellt werden, dass das Hilfsventil 17 in die unbetätigte Stellung zurückgeschaltet wird. Die Betätigungskammer 63 wird dann über den Betätigungskanal 64, den ersten Kanalabschnitt 43 und den Ablasskanal 58 druckentlastet. Das Rückschlagventil 73 gewährleistet hierbei eine rasche Entlüftung an der Zusatz-Drosseleinrichtung 73 vorbei.

Bei beiden Ausführungsbeispielen ist es von Vorteil, wenn sämtliche Komponenten des Softstart-Ventils 1 zu einer Ventileinheit zusammengefasst sind, sodass in fluidischer Hinsicht lediglich der Einlassanschluss 3 und der Auslassanschluss 4 mit entsprechenden Leitungen verbunden werden müssen. In diesem Fall kann auch der in Figuren 2 bis 7 partiell außerhalb des Ventilgehäuses 2 verlaufend dargestellte erste Beaufschlagungskanal 22 ein Bestandteil der Ventileinheit sein.

Die Realisierung des Softstart-Ventils 1 als Ventileinheit schafft auch in besonders vorteilhafter Weise die Möglichkeit zu einer Verwendung als Modul einer modular aufgebauten Druckluft-Wartungsvorrichtung.

## Patentansprüche

1. Softstart-Ventileinrichtung, mit einem zwischen einen ein unter einem Primärdruck stehendes Druckmedium führenden Primärkanal (5) und einen Sekundärkanal (6) eingeschalteten Hauptventilglied (7), das durch eine Schließkraft in eine die Verbindung zwischen Primärkanal (5) und Sekundärkanal (6) abtrennende Schließstellung vorspannbar oder vorgespannt ist und das durch eine entgegengesetzt wirkende, die Schließkraft überwindende Öffnungskraft in eine die Verbindung zwischen Primärkanal (5) und Sekundärkanal (6) freigebende Offenstellung umschaltbar ist, wobei die Öffnungskraft in einem sekundärdruckgesteuerten Betriebsmodus der Ventileinrichtung (1) von dem sich im Sekundärkanal (6) allmählich aufbauenden Sekundärdruck des Druckmediums abgeleitet wird, das unter Umgehung des Hauptventilgliedes (7) über eine Drosseleinrichtung (26) hinweg aus dem Primärkanal (5) in den Sekundärkanal (6) zuströmt, **dadurch gekennzeichnet, dass** Umschaltmittel (14) vorhanden sind, die ein Umschalten des Betriebsmodus der Ventileinrichtung (1) zwischen dem sekundärdruckgesteuerten Betriebsmodus und einem das Hauptventilglied (7) unabhängig vom Sekundärdruck rein zeitabhängig in die Offenstellung umschaltenden, zeitgesteuerten Betriebsmodus ermöglichen.

2. Softstart-Ventileinrichtung nach Anspruch 1, **dadurch gekennzeichnet, dass** der Sekundärdruck in dem zeitgesteuerten Betriebsmodus bezüglich dem Hauptventilglied (7) kräftemäßig wirkungslos geschaltet ist und das Hauptventilglied (7) stattdessen zur Erzeugung der Öffnungskraft in der Öffnungsrichtung von einem ohne Verbindung zum Sekundärkanal (6) gedrosselt zuströmenden Druckmedium beaufschlagt wird.

3. Softstart-Ventileinrichtung nach Anspruch 2, **dadurch gekennzeichnet, dass** im zeitgesteuerten Betriebsmodus eine dahingehende fluidische Verschaltung vorliegt, dass die für die Erzeugung der Öffnungskraft verantwortliche gedrosselte Zuströmung des Druckmediums über die Drosseleinrichtung (26) hinweg stattfindet, deren Ausgang hierbei vom Sekundärkanal (6) abgetrennt ist.

4. Softstart-Ventileinrichtung nach Anspruch 3, **dadurch gekennzeichnet, dass** die im zeitgesteuerten Betriebsmodus in Öffnungsrichtung auf das Hauptventilglied (7) einwirkende, sich durch die gedrosselte Zuströmung allmählich vergrößernde Stellkraft ein allmähliches Umschalten des Hauptventilgliedes (7) in die Offenstellung hervorruft und hierdurch ein Überströmen von Druckmedium aus dem Primärkanal (5) in den Sekundärkanal (6) mit zunehmender Strömungsrate hervorruft.

5. Softstart-Ventileinrichtung nach Anspruch 3 oder 4, **dadurch gekennzeichnet, dass** in die im zeitgesteuerten Betriebsmodus vorhandene Fluidverbindung zwischen der Drosseleinrichtung (26) und einer von dem Druckmedium zu beaufschlagenden Öffnungsfläche (62) des Hauptventilgliedes (7) eine von der Drosseleinrichtung (26) unabhängige Zusatz-Drosseleinrichtung (72) eingeschaltet ist, die während des sekundärdruckgesteuerten Betriebsmodus ohne Funktion ist.

6. Softstart-Ventileinrichtung nach Anspruch 5, **dadurch gekennzeichnet, dass** der Zusatz-Drosseleinrichtung (72) ein eine Fluidrückströmung zulassendes Rückschlagventil (73) parallelgeschaltet ist.

7. Softstart-Ventileinrichtung nach einem der Ansprüche 2 bis 6, **dadurch gekennzeichnet, dass** die im zeitgesteuerten Betriebsmodus vorhandene kräftemäßige Wirkungslosigkeit des Sekundärdruckes bezüglich dem Hauptventilglied (7) **dadurch** erreicht ist, dass der Sekundärdruck zwei einander entgegengesetzten, gleich großen Beaufschlagungsflächen (27, 65) des Hauptventilgliedes (7) auferlegt ist und sich die daraus resultierenden entgegengesetzten Stellkräfte neutralisieren.

8. Softstart-Ventileinrichtung nach einem der Ansprüche 1 bis 7, **dadurch gekennzeichnet, dass** das Hauptventilglied (7) eine zur Erzeugung der Schließkraft mit einem unter einem Steuerdruck stehenden Steuerfluid beaufschlagte Schließfläche (18) aufweist, ferner eine von dem im Sekundärkanal (6) herrschenden Sekundärdruck in Öffnungsrichtung beaufschlagte erste Öffnungsfläche (27) aufweist, außerdem eine entgegengesetzt zur ersten Öffnungsfläche (27) orientierte und gleich groß wie diese ausgebildete Kompensationsfläche (65) aufweist und schließlich eine gleich wie die erste Öffnungsfläche (27) orientierte zweite Öffnungsfläche (62) aufweist, wobei die Umschaltmittel (14) derart ausgebildet sind, dass im sekundärdruckgesteuerten Betriebsmodus die Kompensationsfläche (65) und die zweite Öffnungsfläche (62) unbeaufschlagt sind und lediglich die Schließfläche (18) und die erste Öffnungsfläche (27) unter Fluidbeaufschlagung stehen und dass im zeitgesteuerten Betriebsmodus unter Beibehaltung der Fluidbeaufschlagung der Schließfläche (18) und der ersten Öffnungsfläche (27) zusätzlich die Kompensationsfläche (65) mit dem Sekundärkanal (6) und die zweite Öffnungsfläche (62) mit dem Ausgang der Drosseleinrichtung (26) verbunden ist.

9. Softstart-Ventileinrichtung nach Anspruch 8, **dadurch gekennzeichnet, dass** in die Verbindung zwischen der Drosseleinrichtung (26) und der zweiten Öffnungsfläche (62) eine Zusatz-Drosseleinrichtung (72) und zweckmäßigerweise auch ein dieser parallelgeschaltetes, zur Drosseleinrichtung (26) hin sperrendes Rückschlagventil (73) eingeschaltet ist.

10. Softstart-Ventileinrichtung nach Anspruch 8 oder 9, **dadurch gekennzeichnet, dass** der der Schließfläche (18) aufgeschaltete Steuerdruck von dem aus dem Primärkanal (5) abgegriffenen Primärdruck gebildet ist.

11. Softstart-Ventileinrichtung nach Anspruch 2, **dadurch gekennzeichnet, dass** im zeitgesteuerten Betriebsmodus eine dahingehende fluidische Verschaltung vorliegt, dass die für die Erzeugung der Öffnungskraft verantwortliche gedrosselte Zuströmung des Druckmediums über eine zusätzlich zu der Drosseleinrichtung (26) vorhandene weitere Drosseleinrichtung (42) hinweg stattfindet, wobei gleichzeitig die im sekundärdruckabhängigen Betriebsmodus zur Erzeugung der Öffnungskraft vorhandene fluidische Verbindung zwischen dem Sekundärkanal (6) und dem Hauptventilglied (7) unterbrochen ist.

12. Softstart.-Ventileinrichtung nach Anspruch 11, **dadurch gekennzeichnet, dass** das Hauptventilglied (7) eine zur Erzeugung der Schließkraft mit einem unter einem Steuerdruck stehenden Steuerfluid beaufschlagte Schließfläche (18) aufweist und über eine entgegengesetzt orientierte Öffnungsfläche (27) verfügt, wobei die Umschaltmittel (14) derart ausgebildet sind, dass die Schließfläche (18) sowohl im sekundärdruckgesteuerten als auch im zeitgesteuerten Betriebsmodus von dem Steuerdruck beaufschlagt ist, während die Öffnungsfläche (27) im sekundärdruckgesteuerten Betriebsmodus aus dem Sekundärkanal (6) und im zeitgesteuerten Betriebsmodus unter Abtrennung des Sekundärkanals (6) über die weitere Drosseleinrichtung (42) beaufschlagt ist.

13. Softstart-Ventileinrichtung nach Anspruch 12, **dadurch gekennzeichnet, dass** der Steuerdruck von dem aus dem Primärkanal (5) abgegriffenen Primärdruck gebildet ist.

14. Softstart-Ventileinrichtung nach einem der Ansprüche 1 bis 13, **dadurch gekennzeichnet, dass** die Umschaltmittel (14) ein zum Wechseln des Betriebsmodus zu betätigendes Umschaltventil (15) enthalten, das wahlweise eine den sekundärdruckgesteuerten Betriebsmodus vorgebende erste Schaltstellung oder eine den zeitgesteuerten Betriebsmodus vorgebende zweite Schaltstellung einnehmen kann, wobei es in diesen beiden Schaltstellungen die für die Erzeugung der auf das Hauptventeilglied (7) einwirkenden Öffnungskraft verantwortlichen unterschiedlichen fluidischen Verschaltungen hervorruft.

15. Softstart-Ventileinrichtung nach Anspruch 14, **dadurch gekennzeichnet, dass** das Umschaltventil (15) manuell betätigbar ausgebildet ist.

16. Softstart-Ventileinrichtung nach Anspruch 14 oder 15, **dadurch gekennzeichnet, dass** das Umschaltventil (15) ein bistabiles Ventil ist.

17. Softstart-Ventileinrichtung nach einem der Ansprüche 1 bis 16, **dadurch gekennzeichnet, dass** eine wahlweise in eine Arbeitsstellung oder in eine Ablassstellung schaltbare Steuerventileinrichtung (16) vorhanden ist, die den Sekundärkanal in der Ablassstellung vom Primärkanal (5) abtrennt und gleichzeitig mit der Atmosphäre verbindet und die den Sekundärkanal in der Arbeitsstellung bei gleichzeitiger Abtrennung von der Atmosphäre für den Fluiddurchtritt freigibt.

18. Softstart-Ventileinrichtung nach Anspruch 17, **dadurch gekennzeichnet, dass** ein elektrisch ansteuerbares Hilfsventil (17) zur Betätigung der Steuerventileinrichtung (16) vorhanden ist.

19. Softstart-Ventileinrichtung nach einem der Ansprüche 1 bis 18, **gekennzeichnet durch** eine Ausgestaltung als Ventileinheit mit einem Eingangsanschluss (3) für den Primärkanal (5) und einem Ausgangsanschluss (4) für den Sekundärkanal (6) .

20. Softstart-Ventileinrichtung nach einem der Ansprüche 1 bis 19, **dadurch gekennzeichnet, dass** sie Bestandteil einer Druckluft-Wartungsvorrichtung ist.

## Claims

1. Soft start valve device with a main valve member (7) installed between a primary passage (5) carrying a pressure fluid under primary pressure and a secondary passage (6), which main valve member can be or is preloaded towards a closed position in which the connection between the primary passage (5) and the secondary passage (6) is broken, and which main valve member by an opening force acting in the opposite direction and overcoming the closing force can be switched into an open position enabling the connection between the primary passage (5) and the secondary passage (6), wherein the opening force is derived in a secondary pressure-controlled operating mode of the valve device (1) by the secondary pressure of the pressure fluid which gradually builds up in the secondary passage (6), the pressure fluid flowing from the primary passage (5) into the secondary passage (6) via a restrictor device (26) while bypassing the main valve member (7), **characterised in that** change-over means (14) are provided for a change-over of the operating mode of the valve device (1) between the secondary pressure-controlled operating mode and a time-controlled operating mode in which the main valve member (1) is switched into its open position in a purely time-dependent manner irrespective of the secondary pressure.

2. Soft start valve device according to claim 1, **characterised in that** the secondary pressure is made ineffective in terms of force with respect to the main valve member (1) in the time-controlled operating mode, and **in that** the main valve member (1) is instead pressurised by a pressure fluid flowing in restrictedly without any connection to the secondary passage (6) in order to generate the opening force in the opening direction.

3. Soft start valve device according to claim 2, **characterised in that** in the time-controlled operating mode there is a fluidic interconnection with the result that the restricted inflow of the pressure medium, which is responsible for the generation of the opening force, is routed via the restrictor device (26), the outlet of which is separated from the secondary passage (6) in this mode.

4. Soft start valve device according to claim 3, **characterised in that** the actuating force which acts in the opening direction on the main valve member (1) in the time-controlled operating mode and which gradually increases owing to the restricted inflow causes a gradual change-over of the main valve member (1) into the open position and thereby a transfer of pressure fluid from the primary passage (5) into the secondary passage (6) at an increasing flow rate.

5. Soft start valve device according to claim 3 or 4, **characterised in that** an auxiliary restrictor device (72), which is independent of the restrictor device (26) and which has no function in the secondary pressure-controlled operating mode, is installed into the fluid connection existing in the time-controlled operating mode between the restrictor device (26) and an opening surface (62) of the main valve member (7) to which the pressure fluid is applied.

6. Soft start valve device according to claim 5, **characterised in that** a check valve (73) allowing a fluid return flow is connected in parallel with the auxiliary restrictor device (72).

7. Soft start valve device according to any of claims 2 to 6, **characterised in that** the ineffectiveness of the secondary pressure in terms of forces with respect to the main valve member (7), which exists in the time-controlled operating mode, is achieved by applying the secondary pressure to two opposing application surfaces (27, 65) of equal size of the main valve member (7), so that the resulting opposite actuating forces neutralise each other.

8. Soft start valve device according to any of claims 2 to 7, **characterised in that** the main valve member (7) has a closing surface (18) to which a control fluid is applied at a control pressure to generate the closing force, **in that** it further has a first opening surface (27) to which the secondary pressure prevailing in the secondary passage (6) is applied in the opening direction, **in that** it moreover has a compensation surface (65) oriented opposite to the first opening surface (27) and of the same size as the latter, and **in that** it finally has a second opening surface (62) oriented in the same way as the first opening surface (27), the change-over means (14) being designed such that in the secondary pressure-controlled operating mode the compensation surface (65) and the second opening surface (62) are not pressurised and fluid pressure is applied only to the closing surface (18) and the first opening surface (27), while in the time-controlled operating mode, in addition to fluid pressure being applied to the closing surface (18) and the first opening surface (27), the compensation surface (65) is connected to the secondary passage (6) and the second opening surface (62) is connected to the outlet of the restrictor device (26).

9. Soft start valve device according to claim 8, **characterised in that** an auxiliary restrictor device (72) and expediently also a check valve (73) connected in parallel thereto and blocking towards the restrictor device (26) is/are installed into the connection between the restrictor device (26) and the second opening surface (62).

10. Soft start valve device according to claim 8 or 9, **characterised in that** the control pressure applied to the closing surface (18) is represented by the primary pressure tapped off the primary passage (5).

11. Soft start valve device according to claim 2, **characterised in that** in the time-controlled operating mode a fluidic interconnection is provided such that the restricted feed-in of the pressure fluid which is responsible for generating the opening force is routed via a further restrictor device (42) provided in addition to the restrictor device (26), while at the same time the fluidic connection between the secondary passage (6) and the main valve member (7), which in the secondary pressure-controlled operating mode generates the opening force, is broken.

12. Soft start valve device according to claim 11, **characterised in that** the main valve member (7) has a closing surface (18) to which a control fluid is applied at control pressure to generate the closing force, and **in that** it is provided with an oppositely oriented opening surface (27), the change-over means (14) being designed such that control pressure is applied to the closing surface (18) both in the secondary pressure-controlled and in the time-controlled operating mode, whereas the opening surface (27) is pressurised from the secondary passage (6) in the secondary pressure-controlled operating mode and via the further restrictor device (42) in the time-controlled operating mode while the secondary passage (6) is disconnected.

13. Soft start valve device according to claim 12, **characterised in that** the control pressure is represented by the primary pressure tapped off the primary passage (5).

14. Soft start valve device according to any of claims 1 to 13, **characterised in that** the change-over means (14) include a change-over valve (15) actuated for changing the operating mode, which can optionally adopt either a first switching position defining the secondary pressure-controlled operating mode or a second switching position defining the time-controlled operating mode, wherein it initiates in both switching positions the different fluidic interconnections required for generating the opening force acting on the main valve member (7).

15. Soft start valve device according to claim 14, **characterised in that** the change-over valve (15) is designed for manual operation.

16. Soft start valve device according to claim 14 or 15, **characterised in that** the change-over valve (15) is a bistable valve.

17. Soft start valve device according to any of claims 1 to 16, **characterised in that** a control valve device (16) is provided which can optionally be switched into an operating position or a discharge position, and which in the discharge position disconnects the secondary passage from the primary passage (5) while connecting it to the atmosphere, and which in the operating position enables the secondary passage for fluid flow while disconnecting it from the atmosphere.

18. Soft start valve device according to claim 17, **characterised in that** an electrically selectable auxiliary valve (17) is provided for the actuation of the control valve device (16).

19. Soft start valve device according to any of claims 1 to 18, **characterised by** being designed as a valve unit with an inlet port (3) for the primary passage (5) and an outlet port (4) for the secondary passage (6).

20. Soft start valve device according to any of claims 1 to 19, **characterised in that** it is a part of a compressed air maintenance device.

## Revendications

1. Dispositif de soupape à ouverture douce, avec un organe de soupape principal (7) inséré entre un canal primaire (5) guidant un fluide se trouvant sous une pression primaire et un canal secondaire (6), lequel organe est ou peut être précontraint par une force de fermeture dans une position de fermeture séparant la liaison entre le canal primaire (5) et le canal secondaire (6) et lequel organe peut être commuté par une force d'ouverture surmontant la force de fermeture, agissant de manière inverse dans une position ouverte libérant la liaison entre le canal primaire (5) et le canal secondaire (6), la force d'ouverture étant dérivée dans un mode de fonctionnement commandé par la pression secondaire du dispositif de soupape (1) de la pression secondaire du fluide se constituant petit à petit dans le canal secondaire (6) qui afflue en contournant l'organe de soupape principal (7) au-delà d'un dispositif d'étranglement (26) du canal primaire (5) dans le canal secondaire (6), **caractérisé en ce que** des moyens de commutation (14) sont présents, lesquels permettent une commutation du mode de fonctionnement du dispositif de soupape (1) entre le mode de fonctionnement commandé par la pression secondaire et un mode de fonctionnement commandé par le temps, commutant l'organe de soupape principal (7) indépendamment de la pression secondaire purement en fonction du temps dans la position ouverte.

2. Dispositif de soupape à ouverture douce selon la revendication 1, **caractérisé en ce que** la pression secondaire est établie sans effet en ce qui concerne la force dans le mode de fonctionnement commandé par le temps par rapport à l'organe de soupape principal (7) et **en ce que** l'organe de soupape principal (7) est alimenté au lieu de cela pour la génération de la force d'ouverture dans le sens d'ouverture en un fluide affluant étranglé sans liaison avec le canal secondaire (6).

3. Dispositif de soupape à ouverture douce selon la revendication 2, **caractérisé en ce que** dans le mode de fonctionnement commandé par le temps, un câblage fluidique passant se présente, **en ce que** l'afflux du fluide étranglé responsable de la génération de la force d'ouverture a lieu au-delà du dispositif d'étranglement (26), dont la sortie est séparée en même temps du canal secondaire (6).

4. Dispositif de soupape à ouverture douce selon la revendication 3, **caractérisé en ce que** la force de réglage augmentant petit à petit de par l'afflux étranglé, agissant dans le mode de fonctionnement commandé par le temps dans le sens d'ouverture sur l'organe de soupape principal (7) suscite une commutation progressive de l'organe de soupape principal (7) dans la position ouverte et suscite par là-même un débordement de fluide du canal primaire (5) dans le canal secondaire (6) à une vitesse d'écoulement croissante.

5. Dispositif de soupape à ouverture douce selon la revendication 3 ou 4, **caractérisé en ce que** dans la liaison fluidique présente dans le mode de fonctionnement commandé par le temps entre le dispositif d'étranglement (26) et une surface d'ouverture (62) à alimenter en fluide de l'organe de soupape principal (7), un dispositif d'étranglement supplémentaire (72) indépendant du dispositif d'étranglement (26) est inséré, lequel ne fonctionne pas pendant le mode de fonctionnement commandé par la pression secondaire.

6. Dispositif de soupape à ouverture douce selon la revendication 5, **caractérisé en ce que** le dispositif d'étranglement supplémentaire (72) est monté en parallèle d'un clapet antiretour (73) autorisant un écoulement fluidique.

7. Dispositif de soupape à ouverture douce selon l'une quelconque des revendications 2 à 6, **caractérisé en ce que** la perte d'efficacité en ce qui concerne la force présente dans le mode de fonctionnement commandé par le temps de la pression secondaire par rapport à l'organe de soupape principale (7) est atteinte du fait que la pression secondaire est imposée à deux surfaces d'alimentation (27, 65) de même taille, opposées de l'organe de soupape principal (7) et les forces de réglage opposées en résultant se neutralisent.

8. Dispositif de soupape à ouverture douce selon l'une quelconque des revendications 1 à 7, **caractérisé en ce que** l'organe de soupape principal (7) présente une surface de fermeture (18) alimentée pour la génération de la force de fermeture en un fluide de commande se trouvant sous une pression de commande, de plus présente une première surface d'ouverture (27) alimentée par la pression secondaire régnant dans le canal secondaire (6) dans le sens d'ouverture, en outre présente une surface de compensation (65) orientée à l'opposé de la première surface d'ouverture (27) et réalisée de la même taille que celle-ci et finalement présente une seconde surface d'ouverture (62) orientée comme la première surface d'ouverture (27), les moyens de commutation (14) étant réalisés de telle sorte que dans le mode de fonctionnement commandé par la pression secondaire, la surface de compensation (65) et la seconde surface d'ouverture (62) ne soient pas alimentées et juste la surface de fermeture (18) et la première surface d'ouverture (27) se trouvent sous alimentation fluidique et que dans le mode de fonctionnement commandé par le temps en conservant l'alimentation fluidique de la surface de fermeture (18) et de la première surface d'ouverture (27), en outre la surface de compensation (65) soit reliée au canal secondaire (6) et la seconde surface d'ouverture (62) à la sortie du dispositif d'étranglement (26).

9. Dispositif de soupape à ouverture douce selon la revendication 8, **caractérisé en ce que** dans la liaison entre le dispositif d'étranglement (26) et la seconde surface d'ouverture (62) est inséré un dispositif d'étranglement supplémentaire (72) et de manière appropriée, aussi un clapet antiretour (73) bloquant vers le dispositif d'étranglement (26), monté en parallèle de celui-ci.

10. Dispositif de soupape à ouverture douce selon la revendication 8 ou 9, **caractérisé en ce que** la pression de commande intervenant sur la surface de fermeture (18) est formée par la pression primaire prélevée du canal primaire (5).

11. Dispositif de soupape à ouverture douce selon la revendication 2, **caractérisé en ce que** dans le mode de fonctionnement commandé par le temps, un câblage fluidique passant est présent, **en ce que** l'afflux de fluide étranglé responsable de la génération de la force d'ouverture a lieu au-delà d'un autre dispositif d'étranglement (42) présent outre le dispositif d'étranglement (26), la liaison fluidique présente dans le mode de fonctionnement dépendant de la pression secondaire pour la génération de la force d'ouverture entre le canal secondaire (6) et l'organe de soupape principal (7) étant interrompue en même temps.

12. Dispositif de soupape à ouverture douce selon la revendication 11, **caractérisé en ce que** l'organe de soupape principale (7) présente une surface de fermeture (18) alimentée pour la génération de la force de fermeture en un fluide de commande se trouvant sous une pression de commande et dispose d'une surface d'ouverture (27) orientée à l'opposé, les moyens de commutation (14) étant réalisés de telle sorte que la surface de fermeture (18) soit alimentée en pression de commande non seulement en mode de fonctionnement commandé par la pression secondaire mais aussi en mode de fonctionnement commandé par le temps, alors que la surface d'ouverture (27) est alimentée en mode de fonctionnement commandé par la pression secondaire du canal secondaire (6) et en mode de fonctionnement commandé par le temps en séparant le canal secondaire (6) par le biais de l'autre dispositif d'étranglement (42).

13. Dispositif de soupape à ouverture douce selon la revendication 12, **caractérisé en ce que** la pression de commande est formée par la pression primaire prélevée du canal primaire (5).

14. Dispositif de soupape à ouverture douce selon l'une quelconque des revendications 1 à 13, **caractérisé en ce que** les moyens de commutation (14) contiennent une soupape de commutation (15) à actionner pour le changement de mode de fonctionnement, qui peut occuper au choix une première position de commutation prescrivant le mode de fonctionnement commandé par la pression secondaire ou une seconde position de commutation prescrivant le mode de fonctionnement commandé par le temps, celle-ci suscitant dans ces deux positions de commutation les différents câblages fluidiques responsables de la génération de la force d'ouverture agissant sur l'organe de soupape principal (7).

15. Dispositif de soupape à ouverture douce selon la revendication 14, **caractérisé en ce que** la soupape de commutation (15) est réalisée de manière à pouvoir être actionnée manuellement.

16. Dispositif de soupape à ouverture douce selon la revendication 14 ou 15, **caractérisé en ce que** la soupape de commutation (15) est une soupape bistable.

17. Dispositif de soupape à ouverture douce selon l'une quelconque des revendications 1 à 16, **caractérisé en ce qu'**un dispositif de soupape de commande (16) commutable au choix dans une position de travail ou dans une position d'évacuation est présent, lequel sépare le canal secondaire dans la position d'évacuation du canal primaire (5) et le relie en même temps à l'atmosphère et lequel libère le canal secondaire dans la position de travail en cas de séparation simultanée de l'atmosphère pour le passage fluidique.

18. Dispositif de soupape à ouverture douce selon la revendication 17, **caractérisé en ce qu'**une soupape auxiliaire pouvant être commandée électriquement (17) est présente pour l'actionnement du dispositif de soupape de commande (16).

19. Dispositif de soupape à ouverture douce selon l'une quelconque des revendications 1 à 18, **caractérisé par** une configuration comme unité de soupape avec un raccord d'entrée (3) pour le canal primaire (5) et un raccord de sortie (4) pour le canal secondaire (6).

20. Dispositif de soupape à ouverture douce selon l'une quelconque des revendications 1 à 19, **caractérisé en ce qu'**il fait partie d'un dispositif de maintenance à air comprimé.
